# EUROPEAN PATENT APPLICATION

(11) **EP 0 634 444 A2**
(43) Date of publication of application: **18.01.1995**
(21) Application number: 94201980.3
(22) Date of filing: 08.07.1994
(51) Int. Cl.: C08J 9/16, C08J 9/22, C08L 25/00

(54) **Expandable beads**

(30) Priority: 12.07.1993 EP 93202057
(71) Applicant: SHELL INTERNATIONALE RESEARCH MAATSCHAPPIJ B.V., NL-2596 HR Den Haag (NL)
(72) Inventor: Blihi, Said, B-1348 Ottignies, Louvain-La-Neuve (BE); Brons, Henricus Maria Johannes, B-1348 Ottignies, Louvain-la-neuve (BE); Cureton, Reginald William, B-1348 Ottignies, Louvain-la-neuve (BE); Schaerlaeckens, Anton, NL-4800 DJ Breda (NL); Vliers, Dominique Paul, B-1348 Ottignies, Louvain-la-neuve (BE)

(57) **Abstract**

This invention relates to expandable beads of a polymer of a vinylaromatic compound, such as polystyrene, containing blowing agent, plasticizer, common additives, and a strengthening agent, wherein the strengthening agent is cyclohexane. The invention also relates to the preparation of such beads, and mouldings produced from such beads. In particular, the invention relates to the use of a strengthening agent to improve the cross-breaking strength of the expanded mouldings.

## Description

This invention relates to expandable beads of a polymer of a vinylaromatic compound, such as polystyrene, to the preparation of such beads, and mouldings produced from such beads. In particular, the invention relates to the use of a strengthening agent to improve the cross-breaking strength of the expanded mouldings.

Polystyrene beads are generally produced by free-radical suspension polymerisation of styrene, optionally containing comonomers, employing one or a mixture of initiators. To ascertain optimal results, generally a mixture of initiators such as described in e.g. US patent No. 4,129,703 is used at one or more separate temperature stages. To produce expandable polystyrene (EPS) beads, the beads are concurrently or subsequently impregnated with a blowing agent such as propane, butane, pentane, or any other blowing agent known in the art. By heating the beads above the boiling point of the blowing agent, but below the softening point of the polymer, the beads are expanded and - if carried out in a shaped mould - the desired article is formed.

In addition to the blowing agent, EPS beads generally also contain additives such as plasticizers, solvents and flame retarding agents.

Although the EPS beads and formed articles resulting from the expansion of the same are satisfactory in many respects, there remains a need for additives that besides being toxicologically acceptable, improve the final strength of the moulded article.

Surprisingly, as part of a continuing programme to develop EPS material having improved strength characteristics in the final form, it has now been found that the use of cyclohexane as additive in (the production of) expandable polystyrene beads, drastically improves the strength of articles formed by expanding such beads.

The cyclohexane may also be used in expandable beads of polymers of alpha-methylstyrene, vinyltoluene or similarly substituted styrene monomers and expandable beads of copolymers of the aforementioned monomers with or without styrene. It is to be understood that throughout the specification, were EPS is used, also such expandable polymers are meant.

It is observed that although cyclohexane has been mentioned for use as blowing agent and/or plasticizer (for instance, European patent application No. 0,396,046 mentions as suitable blowing agents propane, butane, pentane, hexane, cyclobutane, cyclopentane, cyclohexane, methyl chloride, dichlorodifluormethane and dichlorotetrafluorethane; whereas Japanese Kokai Nos. 55/125,130 and 60/063,234 mention as plasticizer styrene, ethylbenzene, cyclohexane, heptane, octane and benzene), it is not disclosed for use as a strengthening agent.

The cyclohexane to be used to strengthen the final article may be added together with suitable blowing agents, together with suitable plasticizers or separately at the polymerization stage or the impregnation stage of the preparation of the EPS beads. Alternatively, if a coating is applied on the EPS beads, the cyclohexane may be applied together with the coating.

Suitable amounts of cyclohexane used as strengthening agent are in the range of 0.05 to 5 %wt, preferably in the range of 0.5 to 2 %wt, still more preferably in the range of .8 to 1.5 %wt calculated on the total weight of the EPS bead.

Very good results in respect of strength of the moulding have been obtained when cyclohexane was used in combination with white oil. Accordingly use of cyclohexane in combination with white oil, suitably used in an amount of less than 1.0 %wt, is preferred.

The present invention will be explained in greater detail by way of examples and comparative examples.

### Examples

EPS beads A to F were produced in accordance with example 5 of US patent No. 4,129,703 by heating a suspension of styrene and about 0.37 %wt (on the monomer) of an initiator system comprising 2,5-dimethyl-2,5-bis(2-ethylhexanoylperoxy)hexane, t-butylperoxy isopropyl carbonate and t-butyl perbenzoate to 90 °C, adding about 0.17 %wt of the former initiator after 120 minutes, increasing the temperature during 2 hrs from 90 to 130 °C after 220 minutes, and maintaining the temperature at 180 °C for 3 hrs. The beads were impregnated with pentane (blowing agent) and the additives as set out in Table 1. It is observed that all samples contain 7.3 %wt of pentane, except for samples E and F which contain only 6.3 %wt of pentane.

### Batch pre-expansion

A standard batch pre-expansion was carried out on the Handle KSTY 1000 (tm) pre-expander using 1 kg charges. The beads were expanded for various times using a steam pressure of 0.2 barg. The prefoam beads generated were dried "in situ" in the pre-expander at 60 °C. The density of the prefoam beads was then measured and plotted against the steaming time. Prefoam beads at nominal densities of about 20 kg/m³ were taken and matured overnight before moulding on the Kurtz K45 (tm) moulding machine.

### Moulding

The gas content of the matured prefoam beads was measured prior to moulding on the Kurtz K45 moulding machine. A standard moulding evaluation was then carried out. Tiles (300 x 300 x 50 mm) were moulded over a range of set steam pressures and its effect on foam pressure was recorded and plotted. The pressure decay time was noted and plotted against the corresponding foam pressure. The tiles were then dried in an oven at 70 °C for 2 days and conditioned at about 23 °C. The dry, conditioned tiles made from the prefoam beads of nominal densities of about 15, 20 and 30 kg/m³ were tested for cross-breaking strength.

### Cross-breaking Strength (Karate Test)

Tiles were broken on the Instrom 1195 (tm) tensiometer. The cross-head speed was 500 mm/min with the span being 150 mm. Each of the supporting and the cross-head bars had a radius of 5 mm. The maximum load at break (expressed in N) was recorded and plotted against the corresponding foam pressure measured during moulding. One tile was broken for each steam pressure setting.

### Results and discussion

Despite the reduced amount of blowing agent, Samples E and (in particular) F have better expandability than the other samples. The cyclohexane was still found in the matured product, indicating that it did not act as blowing agent. Moreover, maximum cross-breaking strength was improved, as well as cross-breaking strength at low steam pressures was improved. The latter is particularly desirable to reduce capital and operational costs.

(Comparative) Sample B shows a slight improvement in respect of reference Sample A. (Comparative) Sample C shows that the window of application of white oil is quite small, as too much adversely affects the cross-breaking strength.

(Comparative) Sample D, illustrating a further common plasticizer, is also unable to combine improved expandability with improved cross-breaking strength. It is moreover observed that volatile aromatic compounds are undesirable in articles requiring food-approval.

**Table 1**

| Example | additive | D₃₀ (kg/m³) | CBLₘₐₓ (N) | CBL_{a0.6} (N) |
|---|---|---|---|---|
| A* | reference (no additive) | 22 | 1200 | 850 |
| B* | 0.5 %wt white oil | 20 | 1200 | 900 |
| C* | 1.0 %wt white oil | 18.5 | 1110 | 800 |
| D* | 0.3 %wt styrene monomer | 19 | 1150 | 800 |
| E | 1.0 %wt cyclohexane | 18 | 1260 | 1140 |
| F | 1.0 %wt cyclohexane & 0.5 %wt white oil | 18 | 1280 | 1200 |

| | | | | |
|---|---|---|---|---|
| * Comparative samples | | | | |
| D₃₀ pre-foam density obtained after 30 seconds steaming; the lower the value, the better the expandability. CBLₘₐₓ maximum cross-breaking load at density of 20 kg/m³; parameter reflecting the strength of the moulding. CBL_{a0.6} cross-breaking load at steam pressure of 0.6 barg at a density of 20 kg/m³ ; parameter reflecting the strength obtained at low steam pressures. | | | | |

## Claims

1. Expandable beads of a polymer of a vinylaromatic compound, containing blowing agent, plasticizer, common additives, and a strengthening agent, wherein the strengthening agent is cyclohexane.

2. Expandable beads as claimed in claim 1, wherein the plasticizer is white oil.

3. Use of cyclohexane as additive in expandable beads of a polymer of a vinylaromatic compound for the purpose of improving the cross-breaking strength of the articles formed by expanding such beads.

4. Use as claimed in claim 3, wherein the polymer of a vinyl-aromatic compound is a homo- or copolymer of styrene.

5. Use as claimed in claim 3, wherein the polymer of a vinyl-aromatic compound is polystyrene.

6. Use as claimed in claim 3, wherein the cyclohexane is used in an amount of 0.5 to 2.0 %wt, preferably 0.8 to 1.5 %wt based on the expandable bead.

7. Use as claimed in any one of claims 3 to 6, wherein in addition to cyclohexane, white oil is used, preferably in an amount of less than 1.0 %wt based on the expandable bead, as plasticizer.

8. Process for preparing articles from the expandable beads claimed in claim 1 or 2 by expanding the expandable beads in a mould using steam pressure of between .4 and 1.2 barg, preferably about .6 barg.
